# EUROPEAN PATENT APPLICATION

(11) **EP 2 363 857 A2**
(43) Date of publication of application: **07.09.2011**
(21) Application number: 11000667.3
(22) Date of filing: 27.01.2011
(51) Int. Cl.: G11B 33/12

(54) **Network attached storage**

(30) Priority: 28.01.2010 KR 20100007708
(71) Applicant: Hitachi-LG Data Storage Korea, Inc., Geumcheon-gu Seoul 153-803 (KR)
(72) Inventor: Kang, Sungtaek, Seoul, 153-803 (KR)
(74) Representative: Katérle, Axel

(57) **Abstract**

Disclosed is a network attached storage (NAS). The NAS includes a bracket (47) receiving a hard disk drive, a holder (23,25) hooked on the bracket (47) to prevent detachment of the hard disk drive, and an attachment/detachment device (60) including a push handle (46) moving in a direction of pressure exerted thereon and a guide arm (33,35) pressing the holder according to a motion of the push handle (46) to release the hooking of the holder. Accordingly, the holder configured to prevent the detachment of the hard disk drive from the NAS can be easily uncoupled.

## Description

This application claims the benefit of priority of Korean Patent Application No. 10-2010-0007708 filed on January 28, 2010, which is incorporated by reference in their entirety herein.

### BACKGROUND

### Field

This document relates to a network attached storage (NAS), and more particularly, to a structure allowing for ease of uncoupling of a holder configured to prevent the detachment of a hard disk drive from a NAS.

### Related Art

As terminals such as personal computers, laptop computers, cellular phones and the like have become multifunctional, the terminals are being implemented in the form of multimedia devices equipped with a combination of various functions of, for example, capturing still photos or videos, playing music or video files, providing game services, receiving broadcasting signals, and the like.

A storage for storing data to be used in a multimedia device and data created from the multimedia device may be variously implemented. The storage may be implemented within a multimedia device or separately from the multimedia device.

A storage, implemented separately from a multimedia device, may be classified as a storage area network (SAN), a direct attached storage (DAS) or a network attached storage (NAS).

The SAN may be a storage system for large network users. That is, the SAN may allow for data management by connecting different kinds of storages to a data server in such as manner as to configure a separate local area network (LAN) or network.

The DAS is an external storage system directly connected to a server through a dedicated cable. That is, the DAS adopts a method of adding a storage to each server connected to a network, whereby the extension thereof is facilitated; however, it may impair efficiency when storages are continuously added.

The NAS is a storage connection system in which a storage is directly connected to an existing LAN to thereby provide easy data access to existing users. That is, the NAS allows for file sharing between multiple application servers by connecting a storage directly to an existing LAN or a TCP/IP-based LAN, or by using various network protocols.

Since the NAS is applicable to existing LAN environments in a simple fashion, it can build a storage network environment more cost-effectively than the SAN or DAS. For this reason, the SAN may be suitable for individuals or small to medium sized companies that want to realize a storage network environment.

### Summary

It is, therefore, an object of the present invention to efficiently provide a network attached storage (NAS) allowing for ease of uncoupling of a holder configured to prevent the detachment of a hard disk drive from the NAS.

According to an exemplary embodiment of the present invention, there is provided a network attached storage (NAS), including: a case guiding extraction and insertion of a hard disk drive and including a holder preventing detachment of the hard disk drive through hooking; and an attachment/detachment device including a push handle moving in a direction of pressure exerted thereon from outside, and a guide arm pressing the holder according a motion of the push handle to release the hooking.

The push handle may include first and second push handles, and the holder may include first and second holders corresponding to manipulation of the first and second push handles, wherein the direction of pressure exerted on the first and second push handles may be substantially the same as a direction in which the hooking of each of the first and second holders is released.

The guide arm may include first and second guide arms corresponding to the first and second holders, respectively, and the attachment/detachment device may include a guide gear in mesh with gears formed in the first and second guide arms to allow the first and second guide arms to be cooperative with each other in terms of distance by which the first and second guide arms are moved.

The attachment/detachment device may include an elastic spring contacting the first and second guide arms to make the first and second guide arms return to initial locations thereof when the pressure is released.

The attachment/detachment device may include a stopper selectively coupled to at least one of the first and second guide arms to secure the first and second guide arms in initial locations thereof.

The NAS may further include a bracket receiving the hard disk drive therein, wherein the case guides the extraction and insertion of the hard disk drive through medium of the bracket, and the holder is hooked on the bracket.

According to another exemplary embodiment of the present invention, there is provided a network attached storage (NAS), including: a case; a first holder and a second holder and the second holder when pressure is exerted thereon, wherein the attachment/detachment device includes a guide gear allowing the first and second guide arms to move by a same distance toward the first and second guide arms, respectively.

The first and second guide arms may be provided with pinion gears, and the guide gear may be a rack gear in mesh with the pinion gears provided in the first and second guide arms.

### Brief Description of the Drawings

The above and other objects and features of the present invention will become apparent from the following description of preferred embodiments given in conjunction with the accompanying drawings, in which:
FIG. 1 is a schematic view illustrating a network attached storage (NAS) environment according to an exemplary embodiment of the present invention;
FIG. 2 is a perspective view illustrating the NAS depicted in FIG. 1;
FIG. 3 is a perspective view illustrating a hard disk drive released from the NAS depicted in FIG. 2;
FIG. 4 is a perspective view illustrating the hard disk drive depicted in FIG. 3;
FIG. 5 is an exploded perspective view illustrating a part associated with a loading/unloading device depicted in FIG. 4;
FIG. 6 is a perspective view illustrating how the loading/unloading device depicted in FIG. 4 operates;
FIGS. 7 and 8 are rear views illustrating how the loading/unloading device depicted in FIG. 6 operates; and
FIG. 9 is a rear view of a cover, illustrating a stopper depicted in FIG. 5.

### Detailed Description of the Embodiments

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. Like reference numerals refer to like elements throughout. Moreover, detailed descriptions related to well-known functions or configurations will be ruled out in order not to unnecessarily obscure subject matters of the present invention. While terms such as "first" and "second," etc., may be used to describe various components, such components must not be understood as being limited to the above terms. The above terms are used only to distinguish one component from another.

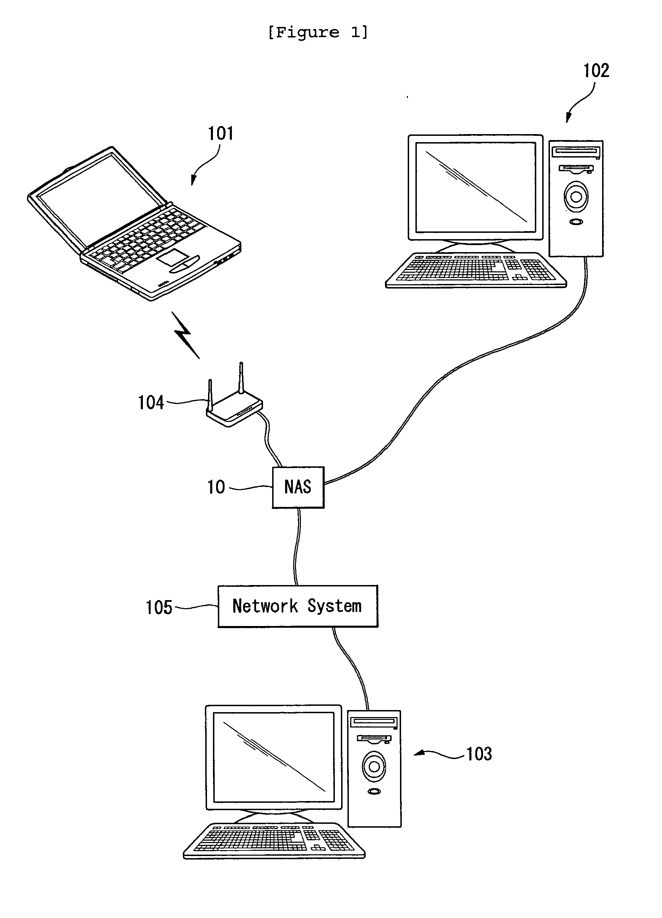

FIG. 1 is a schematic view illustrating a network attached storage (NAS) environment according to an exemplary embodiment of the present invention.

As shown therein, a NAS 10, according to an exemplary embodiment of the present invention, may be connected to a variety of electronic devices 101, 102 and 103.

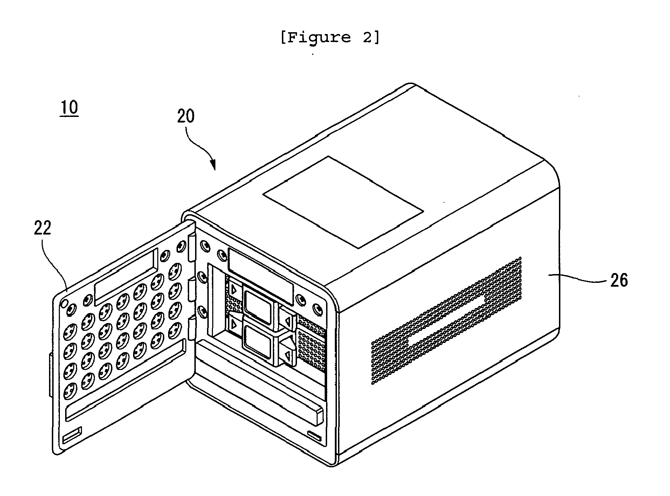

The NAS 10 is a storage system connected to a network. That is, the NAS 10, a storage system, is connected over a network, so that a user is able to access the NAS 10 anytime, anywhere. To this end, the NAS 10 may be assigned an Internet protocol (IP) address, which is a unique address on the Internet. The use of the NAS 100 may ensure safer and more convenient data access than in the case that data is transferred by using a USB memory or the like. The NAS 10 may include a hard disk drive 50 of FIG. 2 or the like as a storage device.

A first electronic device 101 may be connected to the NAS 10 via an access point 104. That is, the first electronic device 101, which may be wirelessly connected to the NAS 10, may be present.

A second electronic device 102 may be directly connected to the NAS 10b through cable. That is, the second electronic device 102 may be an external device connected to the NAS 10 via short distance.

A third electronic device 103 may be connected to the NAS 10 via a network system 105. That is, the NAS 10 and the third electronic device 103 are connected by the medium of the network system 105, rather than directly connected thereto as in the second electronic device 102.

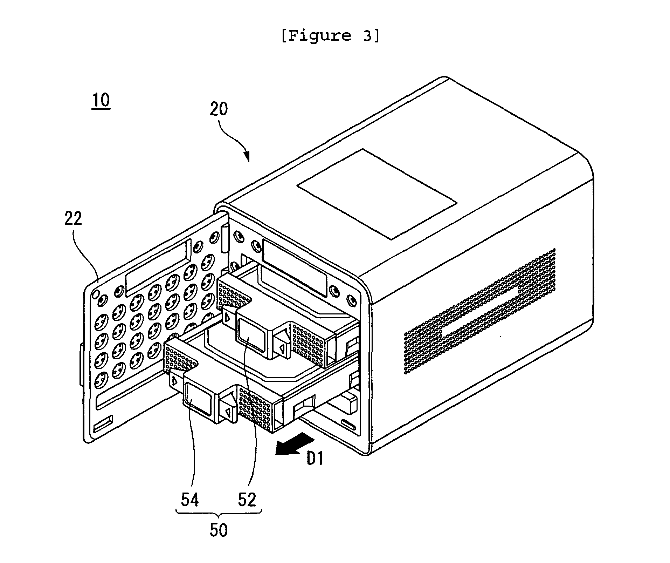

FIG. 2 is a perspective view illustrating the NAS depicted in FIG. 1, and FIG.3 is a perspective view illustrating a hard disk drive released from the NAS depicted in FIG. 2.

As shown in the drawings, the NAS 10, according to an exemplary embodiment of the present invention, may include a hard disk drive 50 serving as a storage device, and an exterior case 20 (or a case 20) housing the hard disk drive 50.

The hard disk drive 50 is a place where data is substantially stored. The hard disk drive 50 is provided inside the NAS 10 and configured to be attachable to or detachable from the NAS 10. A plurality of hard disk drives 50 may be provided according to the storage capacity of the NAS 10. That is, the hard disk drive 50 may include a first hard disk drive 52 and a second hard disk drive 54.

The hard disk drive 50 may be attached or detached by the selection of a user. That is, the hard disk drive 50 may stay inserted in the NAS 10 under normal circumstances of using the NAS 10. However, in the case in which the hard disk drive 50 needs to be replaced and the like, the hard disk drive 50 may be extracted from the NAS 10 in a forward direction D1. The hard disk drive 50 may include the first and second hard disk drives 52 and 54. Also, the first and second hard disk drives 52 and 54 may be selectively extracted out of the NAS 10. Since the first and second hard disk drives 52 and 54 have the same structure except for the locations thereto, a description of the first hard disk drive 52 may substitute for that of second hard disk drive 54 unless a specific note therefor is made.

According to an exemplary embodiment of the present invention, the hard disk drive 50 is securely fixed to the inside of the NAS 10 under normal circumstances; however, it can easily extracted from the NAS 10 such as when a user needs to extract the hard disk drive 50.

The case 20 may constitute the exterior and interior of the NAS 10. The case may be formed of a plastic material, particularly, enhanced plastic such as engineering plastic in order to ensure a predetermined level of strength.

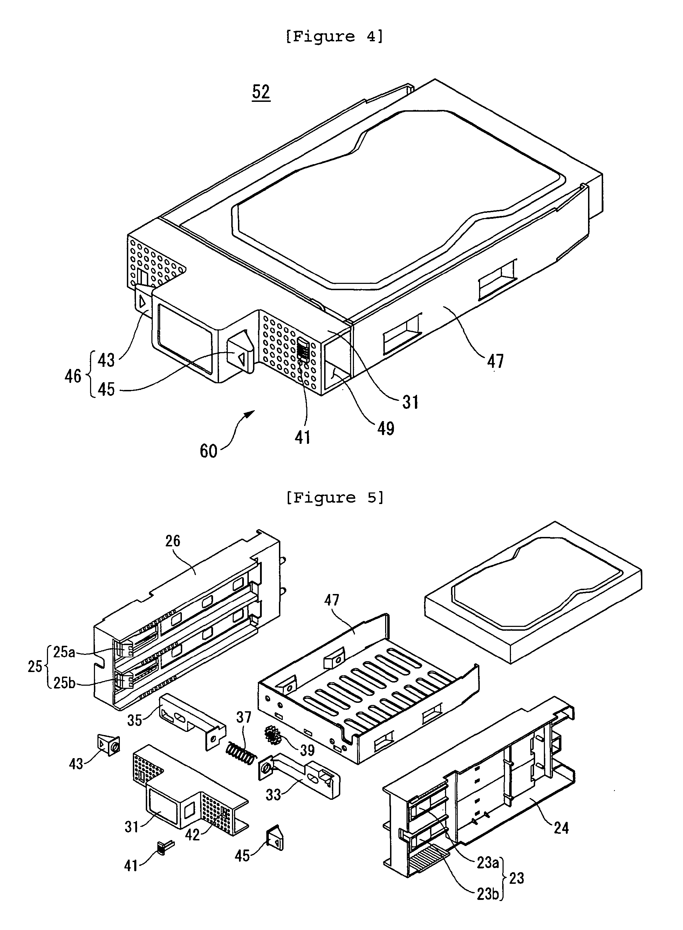

FIG. 4 is a perspective view illustrating the hard disk drive depicted in FIG.3.

As shown therein, the first hard disk drive 52, according to an exemplary embodiment of the present invention, may be coupled to a bracket 47 and an attachment/detachment device 60.

The bracket 47 is a support that receives the first hard disk drive 52. The bracket 47 protects the first hard disk drive 52 from external shock, while serving as a medium allowing the attachment/detachment device 60 to be coupled to the first hard disk drive 52.

The attachment/detachment device 60 is coupled to the first hard disk drive 52 and the bracket 47 such that the first hard disk drive 52 is stably coupled to or uncoupled from the inside of the NAS 10. The attachment/detachment device 60 is coupled to the front side of the first hard disk drive 52 to thereby enhance accessibility to a push handle 46 constituting the attachment/detachment device 60. A user may extract the first hard disk drive 52 to the front by manipulating the push handle 46 of the attachment/detachment device 60. Furthermore, in order to prevent the undesired detachment of the hard disk drive 52, the attachment/detachment device 60 may be provided with a stopper 41. The stopper 41 is disposed in a cover 31 that forms the front surface of the attachment/detachment device 60, thereby improving manipulative properties.

FIG. 5 is an exploded perspective view illustrating a part associated with the attachment/detachment device depicted in FIG. 4.

As shown in the drawing, the attachment/detachment device 60, according to an exemplary embodiment of the present invention, may include the cover 31, first and second handles 43 and 45, first and second guide arms 33 and 35 coupled to the first and second handles 43 and 45, a guide gear 39 connecting the first and second guide arms 33 and 35, an elastic spring 37 exerting elastic force on the first and second guide arms 33 and 35, and the stopper 41 provided on the cover 31.

The cover 31 forms the front surface of the attachment/detachment device 60, and houses a variety of components constituting the attachment/detachment device 60. Each component of the attachment/detachment device 60, including the cover 31, may be formed by injection-molding a synthetic resin material, particularly, a plastic material.

The first and second handles 43 and 45 are parts on which a user exerts pressure. That is, to take out (i.e., extract) the first hard disk drive 52 to the front, a user applies pressure to the first and second handles 43 and 45 by grabbing the first and second handles 43 and 45. When the user exerts pressure on the first and second handles 43 and 45, the force is transmitted to the first and second guide arms 33 and 35 connected to the first and second handles 43 and 45.

The first and second guide arms 33 and 35 are structures that transmit pressure, applied from the first and second handles 43 and 45, to first and second holders 23 and 25. That is, when pressure is applied to the first and second handles 43 and 45, the first handle 43 transmits pressure to the first guide arm 33 while the second handle 45 transmits pressure to the second guide arm 35. The first and second guide arms 33 and 35 having received the pressure are moved in the direction of the pressure, thereby exerting pressure on (i.e., pushing) the first and second holders 23 and 25, respectively. Meanwhile, under no pressure condition, the first and second holders 23 and 25 have end portions inserted in both edges of the cover 31 so as to be hooked on the first hard disk drive 52 (or the bracket 47 housing the first hard disk drive 52) and thus prevent the first hard disk drive 52 from moving back and forth. However, when the first and second guide arms 33 and 35 presses the first and second holders 23 and 25 in an outward direction due to the pressure applied by the user, the first and second holders 23 and 25 are pushed outwardly of the cover 31. In this state, the user can extract the first hard disk drive 52 to the front. The first and second holders 23 and 25 may be formed of the same plastic material as first and second interior cases 24 and 26 and molded integrally with the first and second interior cases 24 and 26 to have a predetermined level of elasticity. Accordingly, when the pressure from the first and second guide arms 33 and 35 is removed, the first and second holders 23 and 25 may return to their initial locations. When the first and second guide arms 33 and 35 return to the initial locations, the movement of the first hard disk drive 52 is limited.

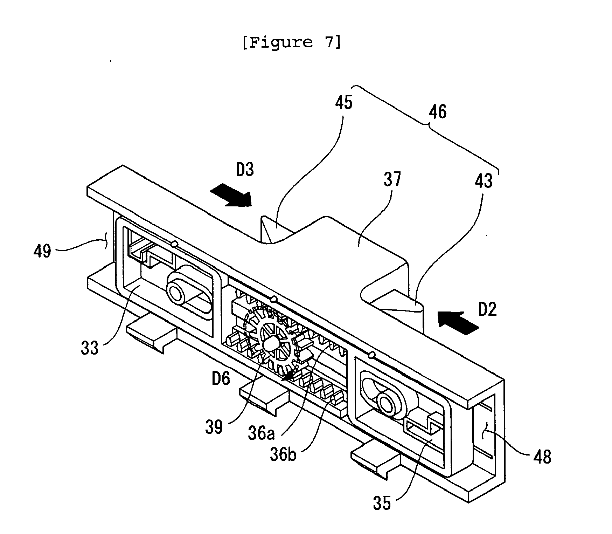

The guide gear 39 is a rack gear provided between the first and second guide arms 33 and 35. First and second pinion gears 36a and 36b, as shown in FIG. 7, are formed inside the first and second guide arms 33 and 35. The guide gear 39 coupled to the first and second pinion gears 36a and 36b of the first and second guide arms 33 and 35 may allow the first and second guide arms 33 and 35 to move in the same fashion. This means that the first and second guide arms 33 and 35 are moved in opposite directions by the pressure applied by the user; however, they are moved by the same distance. As the first and second guide arms 33 and 35 are moved by the same distance, the first hard disk drive 52 can be smoothly extracted.

For example, if a user applies greater pressure to the first push handle 43 than to the second push handle 45, the first guide arm 33 moved by the first push handle 43 is moved farther than the second guide arm 35 moved by the second push handle 45, and the first holder 23 affected by the first guide arm 33 may be moved farther to the outside of the cover 3 than the second holder 25. At this time, the first holder 23 may be pushed completely out of the cover 31 when the second holder 25 is not. Due to such a second holder 25, a user fails to take out the first hard disk drive 52 to the front even if the user applies pressure. The guide gear 39 serves to prevent the above situation from occurring in advance. That is, since the guide gear 39 that rotates in mesh with the first and second guide arms 33 and 35, positioned inside the first and second guide arms 33 and 35, is provided, the first and second guide arms 33 and 35 are moved by substantially the same distance even if greater force is applied to any one of the first and second push handles 43 and 45.

The elastic spring 37 is positioned between the first and second guide arms 33 and 35. The elastic spring 37 is a tension spring that exerts force in a direction by which the first and second guide arms 33 and 35 are spaced apart from each other. As the elastic spring 37 exerts the tensile force on the first and second guide arms 33 and 35, the first and second guide arms 33 and 35 return to their initial location when the pressure from the user is removed. The stopper 41 may be inserted into a coupling hole 42 of the cover 31. The stopper 41 inserted in the coupling cover 42 may move up and down in the coupling cover 42. The stopper 41, when being located in a specific position in the upper or lower side, may confine the motion of the first guide arm 33. Accordingly, even when a user exerts pressure, the first guide arm 33 does not move from the initial location thereof. When the first guide arm 33 does not move, the second guide arm 35 does not move either due to the guide gear 39 as described above. Therefore, the first hard disk drive 52 can be prevented from being released (uncoupled) accidently.

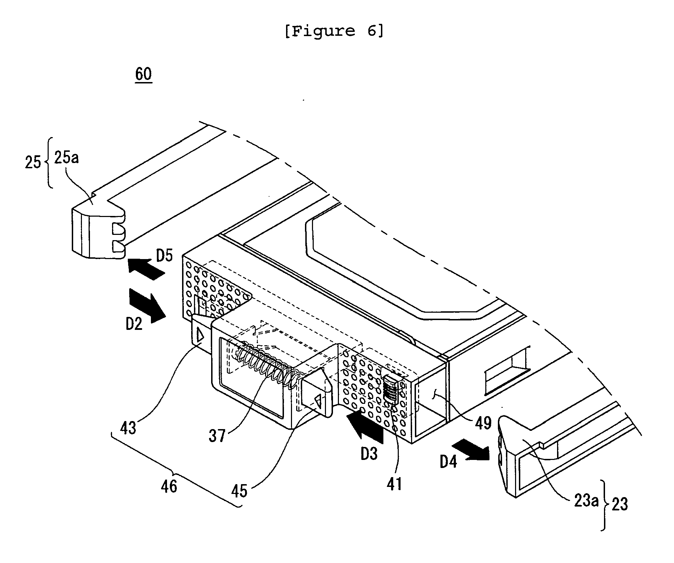

FIG. 6 is a perspective view illustrating how the attachment/detachment device of FIG. 4 operates.

As shown therein, the attachment/detachment device 60, according to an exemplary embodiment of the present invention, may allow the first and second holders 23 and 25 to be selectively uncoupled from the cover 31 by the pressure exerted by a user.

A user who wants to detach the first hard disk drive 52 may exert pressure on the first and second push handles 43 and 45 in second and third directions D2 and D3, respectively. When the user applies pressure exceeding the elasticity of the elastic spring 37 to the first and second push handles 43 and 45, the first and second guide arms 33 and 35 are moved by the pressure. In this case, the first guide arm receiving pressure from the first push handle 43 and the second guide arm 35 receiving pressure from the second push handle 45 may be moved in opposite directions to each other. That is, the first guide arm 33 is moved in a fourth direction D4 while the second guide arm 35 is moved in a fifth direction D5. However, the first and second guide arms 33 are moved by the same distance due to the operation of the guide gear 39.

When the first and second guide arms 33 and 35 are moved in the fourth and fifth directions D4 and D5, the first and second holders 23 and 25 are moved in the fourth and fifth directions D4 and D5 to thus be placed out of first and second coupling locations 48 and 49. When the first and second holders 23 and 25 are positioned outside the first and second coupling locations 48 and 49, the first holder 23 is uncoupled from the first hard disk drive 52. Accordingly, the first hard disk drive 52 can be easily moved to the front.

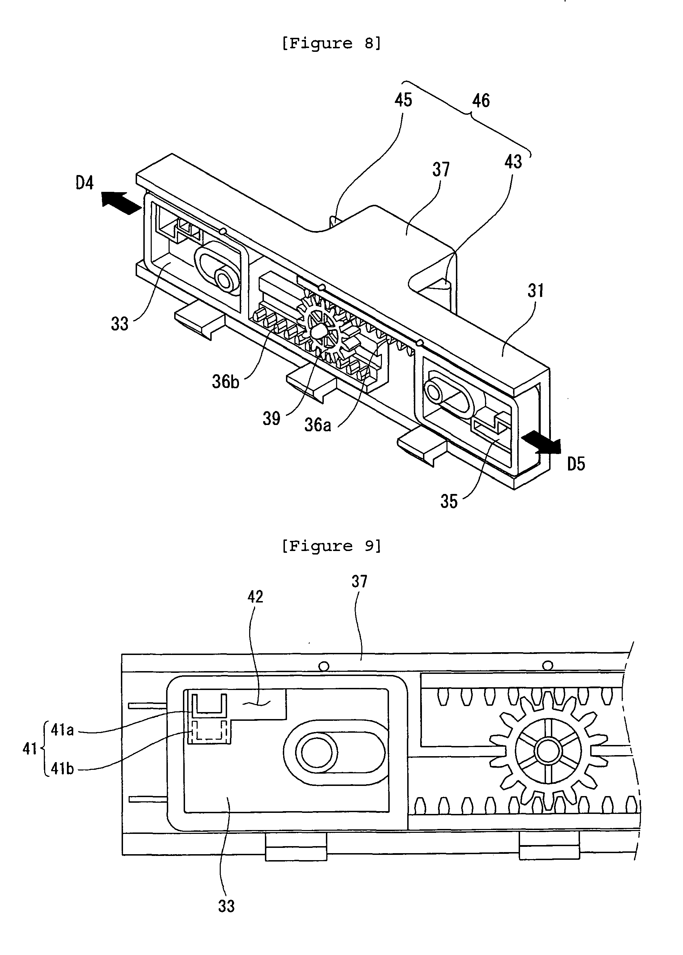

FIGS. 7 and 8 are rear views illustrating how the attachment/detachment device of FIG. 6 operates.

As shown in FIG. 7, a user may apply pressure to the first and second push handles 43 and 45 in the second and third directions D2 and D3. When the first and second push handles 43 and 45 are pressed, the first and second guide arms 33 and 35 are moved, and simultaneously, the guide gear 39 is rotated in a sixth direction D6. That is, the guide gear 39 is rotated in mesh with the first and second pinion gears 36a and 36b formed inside the first and second guide arms 33 and 35. As the guide gear 39 is rotated in the sixth direction D6 so as to move the first and second guide arms 33 and 35 in cooperation with each other, so that the first and second guide arms 33 and 35 can be moved by the same distance.

As shown in FIG. 8, the ends of the first and second guide arms 33 and 35 may be moved up to the very edges of the cover 31 by the pressure exerted by the user. Accordingly, the holder 25 of FIG. 6, inserted in the edge of the cover 31, is pushed outwardly of the cover 31.

FIG. 9 is a rear view of the cover, illustrating the stopper of FIG. 5.

As shown therein, the stopper 41 may be inserted in the coupling hole 42. The stopper 41 may be located in one of a first stopper position 41a and a second stopper position 41b.

When the stopper 41 is located in the first stopper position 41a, the stopper 41 does not confine the motion of the first guide arm 33. Accordingly, when a user applies pressure, the first guide arm 33 is moved freely and the second guide arm 35 is moved together by the motion of the first guide arm 33.

When the stopper 41 is located in the second stopper position 41b, the stopper 41 confines the motion of the first guide arm 33. That is, when a user applies pressure, the wall surface of the coupling hole 41 interferes with the stopper 41 in the second stopper position 41b. Thus, the first guide arm 33 cannot be moved anymore and the motion of the second guide arm 35 is also confined. Thus, the user can prevent undesired operations by positioning the stopper 41 in the second stopper position 41b.

Meanwhile, the first hard disk drive 52 received in the bracket 47 may be mounted between the first and second interior cases 24 and 26. However, the first hard disk drive 52 may be directly mounted between the first and second interior cases 24 and 26, without being received in the bracket 47. That is, a guide guiding the first hard disk drive 52 having a size of 2.5 inches or 3.5 inches may be provided in the first and second interior cases 24 and 26 such that the first hard disk drive 52 may be coupled to the first and second interior cases 24 and 26 without the bracket 48. Furthermore, the cover 31 has holes in locations corresponding to screw holes formed in the first hard disk drive 52, whereby the cover 31 and the hard disk drive 52 may be coupled to each other.

As set forth above, according to exemplary embodiments of the invention, a hard disk drive for a NAS can be conveniently and effectively attached to or detached from the NAS.

While the present invention has been shown and described in connection with the exemplary embodiments, it will be apparent to those skilled in the art that modifications and variations can be made without departing from the spirit and scope of the invention as defined by the appended claims.

## Claims

1. A network attached storage (NAS), comprising:
a case guiding extraction and insertion of a hard disk drive and including a holder preventing detachment of the hard disk drive through hooking; and
an attachment/detachment device including a push handle moving in a direction of pressure exerted thereon from outside, and a guide arm pressing the holder according a motion of the push handle to release the hooking.

2. The NAS of claim 1, wherein the push handle includes first and second push handles, and the holder includes first and second holders corresponding to manipulation of the first and second push handles,
wherein the direction of pressure exerted on the first and second push handles is substantially the same as a direction in which the hooking of each of the first and second holders is released.

3. The NAS of claim 2, wherein the guide arm includes first and second guide arms corresponding to the first and second holders, respectively, and
the attachment/detachment device includes a guide gear in mesh with gears formed in the first and second guide arms to allow the first and second guide arms to be cooperative with each other in terms of distance by which the first and second guide arms are moved.

4. The NAS of claim 3, wherein the attachment/detachment device includes an elastic spring contacting the first and second guide arms to make the first and second guide arms return to initial locations thereof when the pressure is released.

5. The NAS of claim 3, wherein the attachment/detachment device includes a stopper selectively coupled to at least one of the first and second guide arms to secure the first and second guide arms in initial locations thereof.

6. The NAS of claim 1, further comprising a bracket receiving the hard disk drive therein,
wherein the case guides the extraction and insertion of the hard disk drive through medium of the bracket, and the holder is hooked on the bracket.

7. A network attached storage (NAS), comprising:
a case;
a first holder and a second holder extending from the case; and
an attachment/detachment device including a first guide arm and a second guide arm transmitting pressure to the first holder and the second holder when pressure is exerted thereon,
wherein the attachment/detachment device includes a guide gear allowing the first and second guide arms to move by a same distance toward the first and second guide arms, respectively.

8. The NAS of claim 7, wherein the first and second guide arms are provided with pinion gears, and the guide gear is a rack gear in mesh with the pinion gears provided in the first and second guide arms.
